(19) **Europäisches Patentamt**
**European Patent Office**
**Office européen des brevets**

(11) **EP 1 290 485 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **01960310.9**

(22) Anmeldetag: **14.06.2001**

(51) Int Cl.:
**G02B 21/00** (2006.01)

(86) Internationale Anmeldenummer:
**PCT/EP2001/006724**

(87) Internationale Veröffentlichungsnummer:
**WO 2001/096926 (20.12.2001 Gazette 2001/51)**

(54) **VERFAHREN ZUR QUANTITATIVEN OPTISCHEN MESSUNG DER TOPOGRAPHIE EINER OBERFLÄCHE**

METHOD FOR MEASURING SURFACE TOPOGRAPHY IN A QUANTITATIVE AND OPTICAL MANNER

PROCEDE DE MESURE OPTIQUE QUANTITATIVE DE LA TOPOGRAPHIE D'UNE SURFACE

(84) Benannte Vertragsstaaten:
**AT BE CH CY DE DK ES FI FR GB GR IE IT LI LU MC NL PT SE TR**

(30) Priorität: **14.06.2000 DE 10028444**
**26.07.2000 DE 10036227**

(43) Veröffentlichungstag der Anmeldung:
**12.03.2003 Patentblatt 2003/11**

(73) Patentinhaber: **Deutsches Zentrum für Luft- und Raumfahrt e.V.**
**51147 Köln (DE)**

(72) Erfinder:
• **TÖBBEN, Helmut**
**38112 Braunschweig (DE)**
• **SCHMITT, Dirk-Roger**
**38124 Braunschweig (DE)**
• **RINGEL, Gabriele**
**38114 Braunschweig (DE)**

(74) Vertreter: **Einsel, Martin et al**
**Patentanwälte,**
**Einsel & Kollegen,**
**Jasperalle 1a**
**38102 Braunschweig (DE)**

(56) Entgegenhaltungen:
DE-A- 3 432 636    DE-B- 1 278 134
JP-A- 9 325 281    US-A- 4 753 525
US-A- 4 844 616    US-A- 5 955 661
US-A- 5 956 141

• SHIMADA W ET AL: "Optical surface microtopography using phase-shifting Nomarski microscope" OPTICAL TESTING AND METROLOGY III, SAN DIEGO, CA, USA, 8-13 JULY 1990, Bd. 1332, pt.2, Seiten 525-529, XP002186313 Proceedings of the SPIE ISSN: 0277-786X
• HARTMAN J S ET AL: "Quantitative surface topography determination by Nomarski reflection microscopy. II. Microscope modification, calibration, and planar sample experiments" APPLIED OPTICS, 1 SEPT. 1980, USA, Bd. 19, Nr. 17, Seiten 2998-3009, XP002186314 ISSN: 0003-6935

EP 1 290 485 B1

**Beschreibung**

Die Erfindung betrifft ein Verfahren zur quantitativen optischen Messung der Topographie der Oberfläche eines Werkstückes.

Mikroskope werden nicht nur zur näheren Betrachtung kleinräumiger Strukturen eingesetzt, sondern seit längerem auch zur quantitativen Charakterisierung von Oberflächen.

Auflicht-Mikroskope sind sehr einfach in ihrer Handhabung und arbeiten ohne einen Kontakt zum Werkstück, das heißt absolut zerstörungsfrei. Übliche Auflichtverfahren (Hellfeld, Dunkelfeld) sind zur Untersuchung der Topographien von Oberflächen jedoch nicht geeignet, da sie auf Amplitudenunterschiede auf der Oberfläche angewiesen sind. Eine Oberflächentopographie erzeugt jedoch keine Amplitudenunterschiede, sondern lediglich relative Phasenunterschiede in der reflektierten Wellenfront.

Mit Hilfe der Zweistrahl-Interferenz lassen sich diese Phasenunterschiede jedoch in Amplitudenunterschiede umwandeln. In kommerziell erhältlichen Mikroskopen zur quantitativen Charakterisierung von Oberflächentopographien werden verschiedene Anordnungen für eine solche Zweistrahl-Interferometrie verwendet. Das Prinzip der Bildentstehung ist dabei trotz der unterschiedlichen Anordnungen der beiden Teilstrahlen immer dasselbe: Die Oberflächentopographie erzeugt einen Phasenunterschied zwischen den beiden Teilstrahlen, der durch die anschließende Überlagerung in Amplitudenunterschiede umgewandelt wird. Durch eine computergesteuerte Verschiebung der Phasenlage kann dann aus dem Interferenzbild die Oberflächentopographie rekonstruiert werden. Dies wird als sogenannte Phasenverschiebungs-Interferometrie bezeichnet.

Bei diesen Zweistrahl-Interferometern erfolgt die Messung stets relativ zu einer Referenzfläche. Dies führt zum einen sehr nachteilhaft zu einer sehr hohen Empfindlichkeit dieser Messgeräte gegenüber Vibrationen. Darüber hinaus ist die Messgenauigkeit selbst auch noch durch die Rauheit der Referenzfläche begrenzt.

Aufgabe der Erfindung ist es demgegenüber, ein Verfahren zur quantitativen optischen Messung der Topographie der Oberfläche eines Werkstückes vorzuschlagen, das gegenüber Vibrationen unempfindlicher ist und nach Möglichkeit auch eine höhere Messgenauigkeit gewährleistet.

Bei einem Verfahren zur quantitativen optischen Messung der Topographie einer Oberfläche eines Werkstückes, bei dem ein Differential-Interferenz-Kontrast-Verfahren nach Nomarski durchgeführt wird, bei dem mit Licht aus einem engen Frequenzspektrum gearbeitet wird und eine Auswertung mittels Phasenverschiebungs-Interferometrie erfolgt, wird die Aufgabe dadurch gelöst, dass als Auswerteverfahren die Phasenmessungsinterferometrie (PMI) eingesetzt wird, deren Auswertealgorithmus keine Abhängigkeit des Ergebnisses von der Grundhelligkeit oder einer ungleichmäßigen Helligkeitsverteilung enthält, dass eine Kalibrierung der Phasenverschiebung vorgenommen wird, dass dazu eine Aufzeichnung der Bildhelligkeit als Funktion der Position des Nomarski-Prismas oder als Funktion der Phasenlage des Analysators erfolgt, und dass die Auswertung nach einem theoretischen Modell für den Helligkeitsverlauf erfolgt.

Mit einem solchen Verfahren lassen sich überraschend die Probleme lösen. Ein Differential-Interferenz-Kontrast-Mikroskopaufbau nach Nomarski ist zwar schon seit vielen Jahren bekannt und in der Literatur beschrieben.

Ein solcher Mikroskopaufbau erzeugt im Gegensatz zu den Zweistrahl-Interferometem ein für das menschliche Auge sichtbares Abbild der Oberflächentopographie. Allerdings ist das Nomarski-Mikroskop bisher stets nur zur qualitativen Beurteilung von Oberflächentopographien verwendet worden. Die großen Vorteile der Nomarski-Mikroskopie sind an sich einleuchtend, so kommt das entsprechende Verfahren ohne jede Referenzfläche aus. Infolge dessen sind Nomarski-Mikroskope vibrationsunempfindlich. Verschiedentlich sind auch schon Anregungen zum Einsatz von Nomarski-Mikroskopen für Auswertungen gegeben worden, so zum Beispiel von John S. Hartman, Richard L. Gordon und Delbert L. Lessor in "Applied Optics" (1980) 2998 bis 3009 oder M. J. Fairlie, J. G. Akkermann, R. S. Timsit in "SPIE 749" (1987) 105 bis 113 oder auch in der DE 41 92 191 C1 und der DE 42 42 883 C2. Diese Versuche arbeiteten jeweils damit, das entstehende Bild in Graustufen umzusetzen und dann eine quantitative Auswertung dieser Graustufen vorzunehmen.

Von Wataru Shimada, Tadamitu Sato und Toyohiko Yatagai wird in "SPIE 1332" (1990), Seiten 525 bis 529 ein mikrotopographisches Verfahren unter Einsatz eines Nomarski-Mikroskops vorgeschlagen, um quantitative Oberflächenuntersuchungeri tätigen zu können. Dabei werden Laserstrahlen durch Polarisationselemente und ein mit einem Schrittmotor verschiebbares Nomarski-Prisma gegeben.

Die US-PS 5,955,661 beschreibt ein optisches Profilometer auf der Basis eines Nomarski-Mikroskops. Zwei orthogonal polarisierte Strahlen werden über ein Nomarski-Prisma um eine kleine Strecke zueinander versetzt. Die an dem zu untersuchenden Oberflächenprofil reflektierten Strahlen werden dann ausgewertet.

Die Erfindung geht von der herkömmlichen Konzeption einer Bildverarbeitung ab. Stattdessen setzt sie zu dem Nomarski-Mikroskopaufbau eine Möglichkeit zur Phasenverschiebungs-Interferometrie ein. Dies geschieht dadurch, dass eine Einrichtung zur reproduzierbaren Verschiebung der Phase vorgesehen ist. Unter Verschiebung ist insbesondere zu verstehen, dass das Nomarski-Prisma selbst verschiebbar ist oder dass alternativ mittels eines λ/4-Plättchens und eines drehbaren Analysators auch bei feststehendem Prisma eine Phasenverschiebung realisiert werden kann. Dadurch entsteht ein unmittelbarer quantitativer Ansatz zur unmittelbaren Beurteilung von Oberflächentopographien unter Verwendung eines Nomarski-Mikroskops.

Von besonderem Vorteil ist, dass das erfindungsgemäße Verfahren bei einem vorhandenen Mikroskop durchgeführt werden kann, wenn in den Strahlengang eines herkömmlichen Mikroskops eine auswechselbare Moduleinheit mit einem Nomarski-Prisma eingeschoben wird. Diese Moduleinheit wird dort an einer geeigneten Stelle etwa statt eines herkömmlichen Objektivs eingebaut.

Ein wesentliches Detail der Vorrichtung zur Phasenverschiebung ist die Tatsache, dass die Phasenverschiebung vom Polarisationszustand des Lichtes abhängig ist. Entsprechende Vorrichtungen, die aus doppelbrechenden Kristallen bestehen, werden in der Literatur auch als Kompensator oder Phasenschieber bezeichnet. Prinzipiell eignet sich jedes doppelbrechende Medium zur Realisierung eines solchen Phasenschiebers.

In der Auswerte-Einheit kann dann unter Ausnutzung der Vorteile eines Nomarski-Mikroskopes mit seiner hohen Auflösung, Vibrationsunempfindlichkeit und qualitativen Oberflächenbetrachtungsmöglichkeiten eine Phasenverschiebungs-Interferometrie vorgenommen werden.

Die Auswerteeinheit besitzt bevorzugt einen elektrooptischen Bildwandler. Das kann zum Beispiel eine Kamera mit elektronischem Signalausgang oder ein CCD-Sensor sein.

Bevorzugt ist es besonders, wenn die Drehachse des Trägers des Werkstückes auf die optische Achse des Mikroskops zentriert ist. Dabei sollte insbesondere die Zentrierung mit einer Genauigkeit unterhalb der Auflösungsgrenze des Mikroskops vorliegen. Die Drehachse ist dann mit einer Genauigkeit zentriert, die bei einer Drehung des Werkstückes und der verwendeten Kombination von Abbildungssystem und Auswerteeinheit keine Abweichungen des Mittelpunktes des Werkstückes erkennen lässt, so dass messbare Abweichungen nicht auftreten.

Alternativ kann bei nicht ausreichend genauer Justierung die Verschiebung durch Bildvergleichsverfahren ermittelt und im anschließenden Auswerteverfahren ermittelt und korrigiert werden.

Es entsteht ein neuartiges, hochauflösendes, äußerst zuverlässiges und schnelles Messinstrument zur Bestimmung von Rauheiten. Oberflächentopographien können rasch und zuverlässig sowie präzise quantitativ charakterisiert werden.

Alle bekannten Messverfahren mit Zweistrahlinterferometern konnten darüber hinaus keine direkte qualitative Beurteilung der Topographie der Oberfläche mit Hilfe des menschlichen Auges ermöglichen. Die Erfindung schafft jedoch als erheblichen zusätzlichen Vorteil genau das: Schon vor der eigentlichen Messung kann der Benutzer des Mikroskops sich ein Bild von den zu erwartenden Ergebnissen machen. Es wird möglich, vor der Messung eine direkte qualitative Beurteilung mit Hilfe des menschlichen Auges vorzunehmen.

Als Verfahren zur Auswertung des Nomarski-Bildes wird bevorzugt die Phasenmessungsinterferometrie (PMI) eingesetzt, wie sie beispielsweise in anderem Zusammenhang von Katerine Creath, "Comparison of Phase-Measurement Algorithms" in: SPIE Vol. 680, Surface Charactarization and Testing (1986) /19 und in "An Introduction to Phase-Measurement Interferometry" beschrieben wird. PMI wird zur Ermittlung der Form einer Wellenfront in Interferometern durch Phasenmodulation eines Referenzstrahles, Aufzeichnung der Interferenzstreifen oder -Ringe und nachfolgender Auswertung verwendet. Ein großer Vorteil ist, dass durch den Auswertealgorithmus die Abhängigkeit des Ergebnisses von der Grundhelligkeit (beziehungsweise ungleichmäßigen Helligkeitsverteilung) entfällt. Zu diesem Verfahren gibt es verschiedene Lösungswege zur Ermittlung der Phaseninformation und anschließenden Berechnung der Oberflächenform des Werkstückes. Charakteristisch für dieses Verfahren ist, dass es für die Auswertung von Interferenzstreifen oder -Ringen in Zweistrahlinterferometern oder ähnlichen Systemen entwickelt wurde. Für die quantitative Auswertung derartiger Interferometerinformationen sind unter anderem in den vorstehenden Literaturstellen von Creath Beispiele angegeben.

Die Erfindung setzt dieses Verfahren überraschend erfolgreich für die Auswertung des vom Nomarski-Mikroskop erzeugten Bildes ein, bei welchem es sich nicht um ein interferometertypisches Interferenzstreifenmuster handelt. Aufgrund der Eigenschaften des Nomarski-Bildes, ein für das menschliche Auge sichtbares Abbild der Oberflächentopographie zu erzeugen, war es bisher nicht naheliegend, dieses Bild mit Hilfe eines Verfahrens, welches für Interferenzstreifen entwickelt wurde, quantitativ auszuwerten. Die Erfindung setzt diese Verfahren überraschend erfolgreich ein und erlaubt damit erstmalig die quantitative Ermittlung der Oberflächentopographie aus einem Nomarski-Mikroskop-Bild, wobei zum Beispiel Einflüsse einer inhomogenen Beleuchtung oder einer nicht exakt senkrecht zur optischen Achse ausgerichteten Probenoberfläche im Auswertealgorithmus eliminiert werden und nicht durch andere schwierig handhabbare Verfahren (Aufnahme einer Referenzhelligkeit, Aufnahme einer Referenzfläche) kompensiert werden müssen, wie es bei anderen veröffentlichten oder bekannten quantitativen Auswertungen des Nomarski-Bildes notwendig ist.

Bei dem zur Anwendung kommenden Phasenmessungsinterferometrie (PMI)-Verfahren wird die Phase zwischen beiden bilderzeugenden Teilstrahlen durch Verschieben des Nomarski-Prosmas oder alternativ durch Drehen des Analysators bei zusätzlich eingefügtem $\lambda/4$-Plättchen in Schritten zwischen 0 und $\pi$, vorzugsweise um $\pi/2$, verschoben und in aufeinanderfolgenden Messungen die Intensität gemessen, oder die Phase wird kontinuierlich verschoben und die Intensität integriert. Im Allgemeinen werden N Messungen der Intensität (als Integral oder Einzelmessung) Ober das Betrachtungsfeld aufgenommen, wenn die Phase verschoben wird. Dazu ist es sinnvoll, dass der Phasenschieber vorher kalibriert wurde. Mindestens N=3 Messwerte sind notwendig. Bekannt sind verschiedene Auswerteverfahren, unter anderem die der Four-Bucket Technik (N=4), die Three-Bucket Technik (N=3), die Carre-Technik, die mittelnde Threeand-Three Technik, die Five-Bucket Technik (N=5) oder andere ver wandte oder gänzlich andere Techniken, wobei die Techniken alle für die Auswertung von Interferenzstreifen oder -Ringen üblicherweise verwendet werden, nicht jedoch für die Auswertung von Bildern eines Nomarski-Mikroskops. Die Verwendung dieser Verfahren an einem Nomarski-Mikroskop setzt die Erfindung um. Beispielhaft werden die Ergebnisse bei Anwendung der Four-Bucket (N=4) Technik erläutert; andere oder modifizierte Verfahren, die auf Phasenverschiebung basieren und für Interferenzstreifenauswertung entwickelt wurden, sind genauso geeignet und sind Teil der Erfindung.

Verschiedene bevorzugte Ausführungsformen der Erfindung sind in den Unteransprüchen charakterisiert.

Im Folgenden wird anhand der Zeichnung ein Ausführungsbeispiel näher beschrieben. Es zeigen:

Figur 1     eine Schemadarstellung eines erfindungsgemäßen Mikroskops;

Figur 2     eine perspektivische Darstellung eines Moduls als Teil des erfindungsgemäßen Mikroskops;

Figur 3     eine Gesamtansicht eines Aufbaus mit Auswerteeinheit;

Figur 4     die Bildintensität in Abhängigkeit von der Prismaposition;

Figur 5     eine Darstellung des Messprinzips bei der Phasenverschiebungs-Interferometrie;

Figur 6     eine 3D-Darstellung der Topographie einer Oberfläche;

Figur 7     Vergleichskurven verschiedener Messverfahren;

Figur 8     verschiedene Darstellungen von Messergebnissen; und

Figur 9     eine Darstellung der Wiederholgenauigkeit.

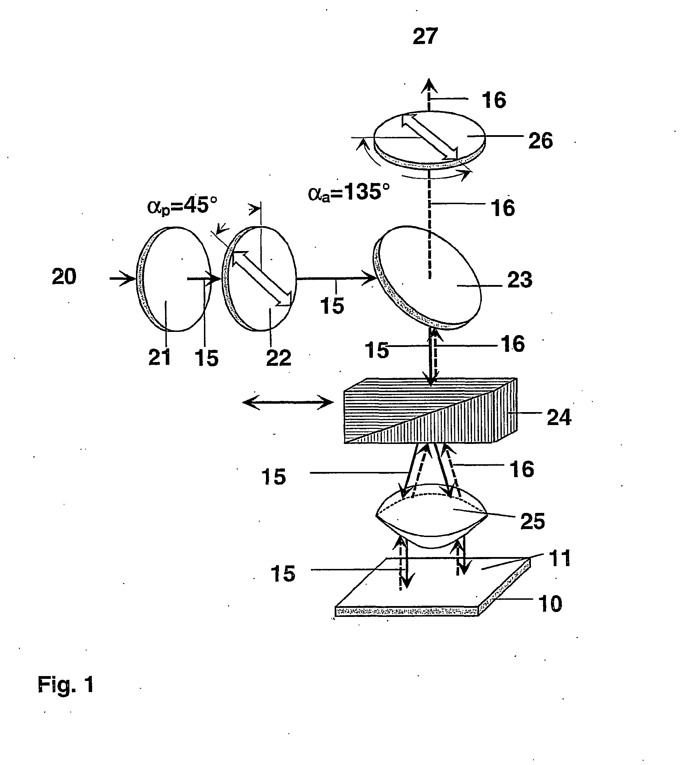

**Figur 1** zeigt schematisch den Aufbau eines erfindungsgemäßen Mikroskops. Die. Gesamtstruktur des Mikroskops ähnelt einem Aufbau nach Nomarski. Zu untersuchen ist ein Werkstück 10 beziehungsweise die Topographie der Oberfläche 11 dieses Werkstückes 10. Der Strahlengang wird durch zunächst einfallendes Licht 15 und anschließend von der Oberfläche 11 des Werkstückes 10 reflektiertes Licht 16 wiedergegeben.

Ausgangspunkt ist eine Lichtquelle 20, die hier eine Weißlichtquelle ist. Das Licht fällt durch einen Spektralfilter 21 mit einem engen Frequenzspektrum. Das Licht dieses engen Frequenzspektrums fällt anschließend auf einen Polarisator 22 und wird dort linear polarisiert. Es gelangt anschließend zu einem teildurchlässigen, hier halbdurchlässigen Spiegel 23, der so in den Strahlengang geführt ist, dass er das von der Lichtquelle 20 her einfallende Licht in Richtung der Oberfläche 11 des Werkstückes 10 umlenkt. Das Werkstück wird häufig auch als Probe bezeichnet.

Vom Spiegel 23 fällt das Licht auf das Nomarski-Prisma 24, ein doppelbrechendes Prisma. Dieses Prisma spaltet das Licht in zwei orthogonal linear polarisierte Teilstrahlen auf, die nach Durchlaufen einer Objektivlinse 25 mit einem kleinen lateralen Versatz auf die Oberfläche 11 des Werkstückes 10 auftreffen. Bei der Reflexion an der Oberfläche 11 des Werkstückes 10 erfahren die beiden Teilstrahlen daher aufgrund der Topographie der Oberfläche 11 eine relative Phasenverschiebung zueinander. Die Strahlen des reflektierten Lichts 16 werden nach erneutem Durchlaufen der Objektivlinse 25 nun im Nomarski-Prisma 24 wieder überlagert.

Sie laufen weiter durch den halbdurchlässigen Spiegel 23 zu einem Analysator 26, in dem eine Selektion einer gemeinsamen Polarisationskomponente erfolgt. Die Teilstrahlen sind nun wieder interferenzfähig.

Das auf diese Weise entstehende Interferenzbild enthält Informationen über die differentiellen Höhenänderungen entlang der Richtung des Strahlversatzes.

Es wurde festgestellt, dass mit einem solchen Mikroskop noch Oberflächenrauheiten in der Größenordnung von 0,05 nm sichtbar gemacht werden können. Das Interferenzbild stellt mit zwei kleinen Einschränkungen ein gutes Bild der Oberfläche 11 des Werkstückes 10 dar. Zum einen ist es kein direktes Abbild der Oberflächentopographie, sondern lediglich ein Gradientenbild, das nicht Höhen, sondern Höhenänderungen abbildet.

Zum anderen werden diese Höhenänderungen nur entlang der Scherrichtung sichtbar.

Die lokale Bildintensität ist durch den relativen Phasenunterschied zwischen den beiden linear polarisierten Teilstrahlen bestimmt. Für einen Phasenunterschied $\chi$ ergibt sich die Intensität in der Bildebene zu:

$$I = I_{\max}\left\{Q + \frac{1}{2}[1-Q]\cdot[1-\cos(\chi)]\right\}. \qquad (1)$$

Die Größe $I_{\max}$ bezeichnet die maximal zu beobachtende Intensität und die Größe $Q$ die optischen Verluste innerhalb des Mikroskops. Für ein bestimmtes optisches System stellen diese Verluste eine Konstante dar, während die maximale Intensität von der Reflektivität der beobachteten Oberfläche abhängig ist. Die Phasenverschiebung $\chi$ besteht aus zwei Anteilen, einem Anteil $\alpha$, der von der Oberflächentopographie abhängt, und einem weiteren Anteil $\beta$, der sich aus der Position und den Eigenschaften des Nomarski-Prismas ergibt.

$$\chi = \alpha + \beta. \qquad (2)$$

Der Betrag der Phasenverschiebung $\beta$ ändert sich linear mit der Verschiebung $x$ des Prismas entlang der Scherrichtung, so dass

$$\beta = \beta_0 + \frac{d\beta}{dx}x \qquad (3)$$

gilt. In dieser Gleichung bezeichnet $\beta_0$ die Phasenverschiebung an der Stelle $x = 0$ und $d\beta/dx$ den Gradienten der Phasenverschiebung entlang der Scherrichtung.

Um den Gradienten der Phasenverschiebung entlang der Scherrichtung zu bestimmen, ist eine Kalibrierung des Systems empfehlenswert, die später erläutert wird. Neben der Phasenverschiebung erfahren die Teilstrahlen entgegengesetzte Änderungen ihrer Ausbreitungsrichtungen, die auf der Probenoberfläche zur örtlichen Aufspaltung in zwei Lichtpunkte mit dem Abstand $\Delta s$ führt. Die vom Prisma verursachte Phasenverschiebung verändert die Hintergrundhelligkeit des gesamten Interferenzbildes, während die Oberflächentopographie zu regionalen Modulationen der Bildintensität führt. Geht man von nahezu senkrechtem Lichteinfall auf die Oberfläche aus, so führt eine Höhendifferenz $\Delta z$ entlang der Scherrichtung zwischen den beiden Teilstrahlen zu einer Phasenverschiebung a von

$$\alpha = \frac{4\pi}{\lambda}\Delta z. \qquad (4)$$

Damit ist die Phasenverschiebung $\alpha$ proportional zur Höhenänderung $\Delta z$ entlang der Scherrichtung. Für die Intensitätsverteilung im Interferenzbild folgt damit

$$I = I_{\max}\left\{Q + \frac{1}{2}[1-Q]\cdot\left[1-\cos\left(\frac{4\pi}{\lambda}\Delta z + \beta_0 + \frac{d\beta}{dx}x\right)\right]\right\}. \qquad (5)$$

Um allein aus einer solchen Intensitätsverteilung quantitative Aussagen über die Oberflächentopographie zu erhalten, wäre es erforderlich, die gemes-senen Intensitäten durch eine geeignete Kalibrierung den entsprechenden Höhenänderungen zuzuordnen. Dieses Verfahren ist jedoch äußerst aufwendig und unsicher.

Erfindungsgemäß wird jetzt jedoch die Phasenverschiebungsinterferometrie eingesetzt. Sie ermöglicht es, die Phase $\alpha$ direkt zu bestimmen. Herkömmlich werden bei solchen Verfahren in anderem Zusammenhang verschiedene relative Phasenverschiebungen zwischen dem Mess- und dem Referenzstrahl eingestellt und dann die Intensitätsverteilung bestimmt.

Die Phasenverschiebungen werden durch die Änderung des optischen Weges im Referenzstrahlengang eingestellt. Dazu wird mit einer piezoelektrischen Keramik die Referenzfläche entlang der optischen Achse verschoben. Aus dem so gewonnenen Satz von Intensitätsverteilungen wird der Anteil a an der Phasenverschiebung $\chi$, der aus der Oberflächentopographie resultiert, berechnet.

Bei der Erfindung wird in der in Figur 1 dargestellten Ausführungsform jedoch ein verschiebbares Nomarski-Prisma 24 in ein Auflichtmikroskop integriert. In der dargestellten Ausführungsform ist die Optik des Mikroskops ausreichend doppelbrechungsfrei und in den Beleuchtungsstrahlengang und Betrachtungsstrahlengang können Polarisatoren 22 beziehungsweise Analysatoren 26 integriert werden:

In dem Mikroskop wird die relative Phasenverschiebung zwischen den beiden Strahlen auf sehr einfache Weise durch Verschiebung des Nomarski-Prismas 24 entlang der Scherrichtung erzeugt. Es ist ein Satz von mindestens drei Intensitätsverteilungen nötig, da die Gleichung (5) drei unbekannte Größen enthält, die maximale Intensität $I_{max}$, die optischen Verluste $Q$ und die Phasenverschiebung $\alpha$. In der Praxis hat sich jedoch die Verwendung von vier Intensitätsverteilungen bewährt. Diese vier Intensitätsverteilungen $I_1$, $I_2$, $I_3$ und $I_4$ mit Phasenverschiebungen $\beta_i$ von 0, $\pi/2$, $\pi$ und $3/2\pi$ werden durch Gleichung (6) beschrieben:

$$I_i = I_{\max}\left\{Q + \frac{1}{2}[1-Q]\cdot[1-\cos(\alpha+\beta_i)]\right\}, \ \beta_i = \beta_0 + \frac{d\beta}{dx}x_i. \qquad (6)$$

Die Phase $\beta_i$ lässt sich durch die Verschiebung des Nomarski-Prismas 24 entlang der Scherrichtung um die Strecke $x_i$ einstellen. Aus diesen vier Intensitätverteilungen lässt sich die Phasenverschiebung $\alpha$

$$\alpha(x,y) = \tan^{-1}\left[\frac{I_4(x,y)-I_2(x,y)}{I_1(x,y)-I_3(x,y)}\right] \qquad (7)$$

dann leicht bestimmen. Die Bestimmung der Phasenverschiebung a erfolgt mit diese Verfahren nur bis auf ganzzahlige Vielfache von $\pi$. Aufgrund der Periodizität der Winkelfunktionen werden die Werte für $\alpha$ in den Bereich zwischen $-\pi$ und $\pi$ gefaltet. Zur vollständigen Bestimmung der Phasenverschiebung muss daher eine Entfaltung vorgenommen werden. Dazu werden Vielfache von $\pi$ addiert bzw. subtrahiert, bis die Phasendifferenz zwischen zwei benachbarten Bildpunkten kleiner als $\pi/2$ ist. Voraussetzung dafür ist jedoch, dass die Höhendifferenz zwischen zwei benachbarten Bildpunkten keine größere Phasenverschiebung als $\pi/2$ hervorruft. Ist die Phasenverschiebung auf diese Weise bestimmt, so ergibt sich der Gradient der Oberflächentopographie $\partial z/\partial x$ zu:

$$\frac{\partial z(x,y)}{\partial x} = \frac{\lambda}{4\pi}\frac{\alpha(x,y)}{\Delta s}. \qquad (8)$$

Durch numerische Integration entlang der Scherrichtung lässt sich daraus ein Linienprofil der Oberflächentopographie in x-Richtung erstellen.

$$z_x(x_i,y_j) = \sum_{k=0}^{i}\Delta x\frac{\lambda}{4\pi}\frac{\alpha_x(x_k,y_j)}{\Delta s} + c_j. \qquad (9)$$

Die $x$-Indizes sollen verdeutlichen, dass nur Oberflächenstrukturen in $x$-Richtung erfasst werden. Orientiert der Nutzer die Probe so unter dem Mikroskop, dass die interessanten Strukturen senkrecht zur Scherrichtung verlaufen, ergeben sich trotz dieser Einschränkung aussagekräftige Ergebnisse.

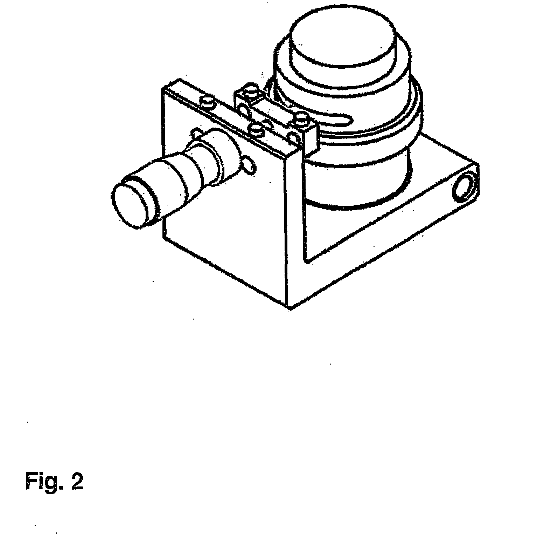

Ein bevorzugtes Ausführungsbeispiel der Erfindung zeigt **Figur 2**. Es handelt sich um ein Modul mit einem Nomarski-Prisma 24. Es ist so konstruiert, dass es in ein vorhandenes Mikroskop anstelle eines herkömmlichen Objektivs eingebaut werden kann. Das Prisma lässt sich entlang der Scherrichtung verschieben, so dass sich zwischen den beiden Teilstrahlen eine relative Phasenverschiebung einstellen lässt. Die Verschiebung wird manuell mit einer Mikrometerschraube bzw. Feinmessschraube durchgeführt. Je nach Ausführungsbeispiel lässt sie sich auch automatisch mit einem Schrittmotor, einem piezoelektrischen Versteller o.ä. durchführen. Das Prisma mit dem Verschiebemechanismus kann ebenfalls um die optische Achse gedreht werden, um es an die Geometrie des Mikroskops anzupassen. Darüber hinaus ist es auch möglich, die Phasenverschiebung bei feststehendem Prisma durch das Einbringen eines λ/4-Plättchens und die Drehung des Analysators zu realisieren. Angeschlossen an das Modul ist ein Computer zur automatischen Steuerung der Phasenverschiebung.

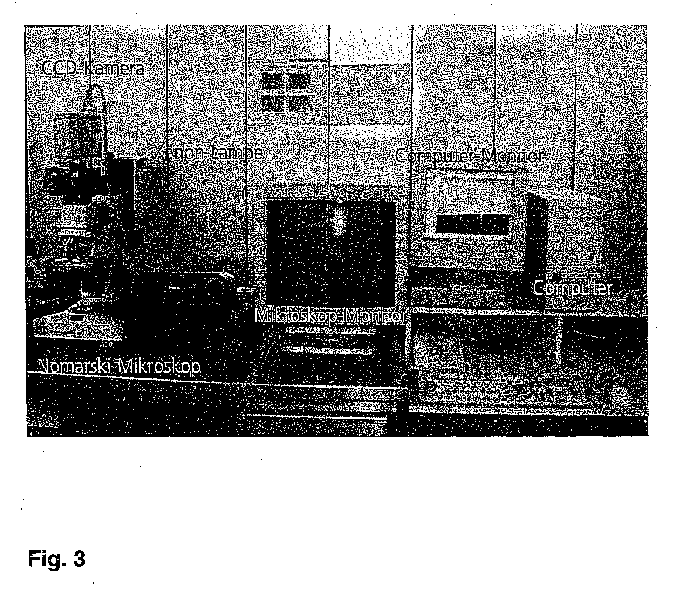

**Figur 3** zeigt, wie gemäß der Erfindung ein kommerziell verfügbares Mikroskop geschaffen werden könnte. Das Modul wird entsprechend Figur 1 zwischen Objektiv und Objektivaufnahme eingebaut. Ebenfalls werden zwei Polarisationsfilter zusätzlich eingebaut.

Die Messung der Intensitätsverteilung erfolgt mit einem Sensor 27, beispielsweise mit einer hochauflösenden CCD Messkamera. Die Kamera ist um die optische Achse des Mikroskops drehbar, so dass die Scherrichtung mit der Richtung der Zeilen oder der Spalten der Kamera in Übereinstimmung gebracht werden kann. Über eine digitale Schnittstelle ist die Steuereinheit der Kamera mit einem Bildspeicher verbunden. Dieser Bildspeicher ist in eine-Auswerteeinrichtung 30 mit einem Computer integriert. Mit Hilfe des Computers ist die digitale Bearbeitung und Auswertung der Nomarski Aufnahmen möglich. In Figur 3 zeigt die linke Bildhälfte das Mikroskop mit dem erfindungsgemäßen Modul inklusive Xenon-Lampe und CCD-Kamera, die rechte die Auswerteeinrichtung mit einem Bildverarbeitungssystem, welches einen Computer mit eingebautem Bildspeicher und zwei Monitoren aufweist.

Die Daten des CCD-Chips sollten so gewählt sein, dass die laterale Auflösung durch die optische Auflösung des Mikroskops begrenzt wird.

Die vertikale Auflösung wird durch das Signal-zu-Rausch Verhältnis des Detektors begrenzt. Es lässt sich allerdings kein absoluter Grenzwert angeben, da zu dessen Bestimmung keine geeigneten Tiefen-Einstellnormale zur Verfügung stehen. Daher wird das vertikale Auflösungsvermögen über die sogenannte Wiederholgenauigkeit charakterisiert. Dazu werden an einer Oberfläche zwei identische Messungen durchgeführt und die dadurch ermittelten Oberflächentopographien voneinander subtrahiert. Die mittlere quadratische Rauheit dieser Differenzbildung stellt ein Maß für die vertikale Auflösungsgrenze dar. Es bedeutet, dass ein Tiefen-Einstellnormal mit dieser Tiefe gerade nicht mehr aufgelöst werden kann, da das Signal-zu-Rausch Verhältnis Eins beträgt.

Der vertikale Dynamikbereich wird durch drei Faktoren beschränkt: Zunächst darf die Höhendifferenz zwischen benachbarten Bildpunkten keine größere Phasendifferenz als $\pi/2$ hervorrufen. D.h. die Höhendifferenz zwischen benachbarten Bildpunkten darf nicht größer als λ/4 sein. Andernfalls liefert das Phasenverschiebungs-Verfahren falsche Ergebnisse. Ist dieses Kriterium erfüllt, so wird der maximal noch zu messende Höhenunterschied durch den Schärfentiefebereich des Mikroskops beschränkt.

Um den praktischen Nutzen der Erfindung zu demonstrieren, wurden ein Tiefen-Einstellnormal sowie verschiedene BK7 Oberflächen untersucht. Die dabei erzielten quantitativen Ergebnisse werden im Folgenden dargestellt.

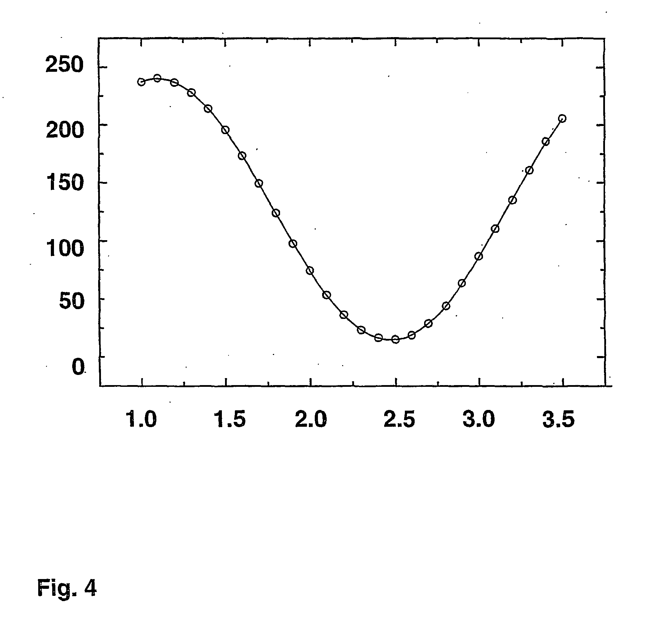

Zunächst wurden die optischen Komponenten des Nomarski-Mikroskops (Polarisator 22, Analysator 26 und Nomarski-Prisma 24) entsprechend Figur 1 justiert. Der CCD Sensor war so ausgerichtet, dass die Scherrichtung des Mikroskops mit den Zeilen des Sensors übereinstimmt. Zur Kalibrierung der relativen Phasenverschiebung zwischen den beiden Teilstrahlen, die durch das Nomarski-Prisma hervorgerufen wird, diente das Tiefen-Einstellnormal. Es zeichnet sich, abgesehen von den Fugen, durch eine sehr geringe Rauheit aus, die im Nomarski-Mikroskop zu einer entsprechend gleichförmigen Helligkeit führt. Die Bildhelligkeit wurde als Funktion der Prismaposition aufgezeichnet. Dazu erfolgte die Verschiebung des Prismas über einen Bereich von 2,5 mm in Schritten von 0,1 mm. An jedem Messpunkt wurde die Intensitätsverteilung bei 100 ms Belichtungszeit und 0 dB Verstärkung über 16 Einzelbilder gemittelt. Die Grundhelligkeit berechnet sich durch die Mittelung über die gesamte Fläche des CCD Sensors. Die Helligkeit in Graustufen ist in **Figur 4** als Funktion der Prismaposition aufgetragen, die nach rechts in mm angegeben ist.

Die Messpunkte in Figur 4 zeigen diesen gemessenen Helligkeitsverlauf in Abhängigkeit von der Prismaposition und die nichtlineare Regression durch Gleichung (5). Die Übereinstimmung zwischen den Messwerten und der nichtlinearen Regression ist sehr gut. Die nichtlineare Regression liefert eine maximale Intensität $I_{max}$ von 240 Graustufen bei Verlusten $Q$ von 0,06. Für den Phasenverschiebungsgradienten $d\beta/dx$ ergeben sich 2,28 rad/mm bei einem Startwert $\beta_0$ von 0,66 rad. Während $I_{max}$ und $Q$ von der Reflektivität der untersuchten Oberfläche abhängig sind, ist $d\beta/dx$ unabhängig von den Eigenschaften der zugrundeliegenden Oberfläche und $\beta_0$ willkürlich wählbar.

Die für die Phasenverschiebungs-Interferometrie relevante Größe stellt der Phasenverschiebungs-Gradient $d\beta/dx$ dar. Durch seine Kenntnis lässt sich die Phasenverschiebung zwischen den beiden Teilstrahlen auf beliebige Werte zwischen 0 und $2\pi$ einstellen.

Damit sind die nötigen Voraussetzungen geschaffen, um Oberflächentopographien mit Hilfe der Phasenverschiebungs-Interferometrie quantitativ zu bestimmen. Im Folgenden wird das Messprinzip am Beispiel des 98,5 nm Tiefen-Einstellnormals dargestellt:

Das Tiefen-Einstellnormal wurde so unter dem Mikroskop orientiert, dass die 98,5 nm Fuge senkrecht zur Scherrichtung verläuft. Dann erfolgte die Aufnahme von vier Interferenzbildern mit relativen Phasenverschiebungen $\beta_i$ von 0, $\pi/2$, $\pi$ und $3/2\pi$ zwischen den beiden Teilstrahlen. Die vorausgegangene Kalibrierung liefert für eine erwünschte Phasenverschiebung um $\pi/2$ eine erforderliche Verschiebung der Prismaposition um 0,69 mm. Die Darstellung der Ergebnisse ist durch die verwendete 3D-Software auf einen Bereich von maximal 512 x512 Bildpunkte beschränkt.

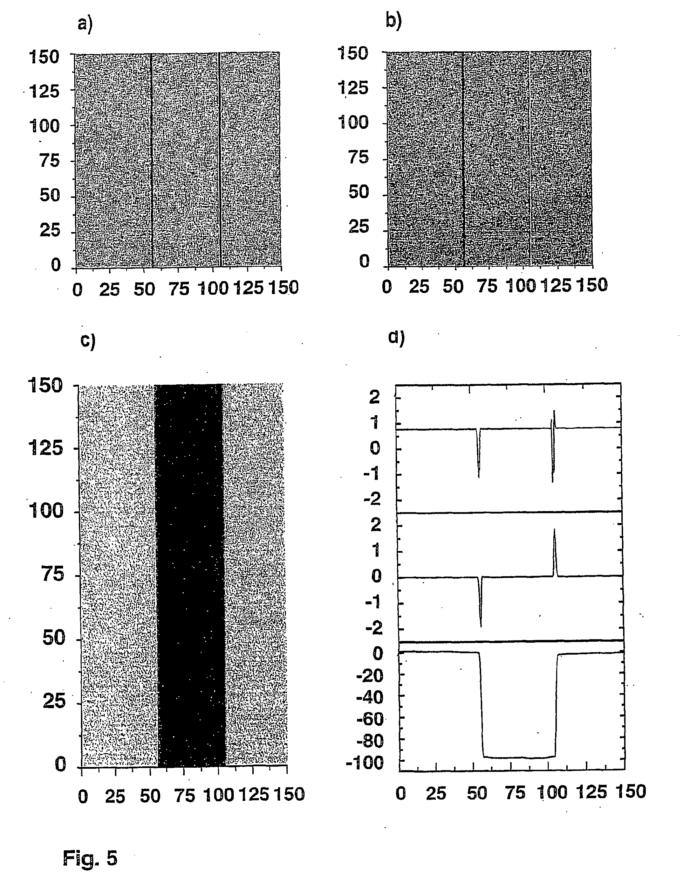

In **Figur 5 a)** ist das Ergebnis der Phasenberechnung für das 98,5 nm Tiefen-Einstellnormal dargestellt. **Figur 5 b)** zeigt die korrigierte Phasenverteilung, aus der sich die Oberflächentopographie in **Figur 5 c)** mittels numerischer Integration rekonstruieren lässt. Es handelt sich jeweils um einen 450 x 450 Bildpunkte großen Ausschnitt in Graustufendarstellung, d.h. die Helligkeit eines Bildpunktes ist proportional zu seiner Höhe. Es sind x nach rechts und y nach oben jeweils in $\mu$m eingetragen. Zur besseren Veranschaulichung zeigt **Figur 5 d)** jeweils die unterste Zeile der Graustufendarstellungen aus Figur 5 a), b) und c) als eindimensionales Profil. Wiederum ist x in $\mu$m nach rechts aufgetragen, hier jedoch z in nm nach oben.

In Figur 5 a) sind die beiden Kanten der Fuge deutlich als dunkle Streifen zu erkennen, wobei der rechte dunkle Streifen einen schwachen hellen Saum hat. Das eindimensionale Profil der Phase in Figur 5 d) verdeutlicht den Unterschied zwischen den beiden Streifen. Der helle Saum des zweiten Streifens ist auf die Faltung der Phase in den Wertebereich zwischen $-\pi$ und $\pi$ zurückzuführen. Für eine quantitative Auswertung ist die Phasen-verteilung aus Figur 5 a) zu korrigieren, indem sie zunächst entfaltet und dann einer linearen Regression unterzogen wird. Zur Entfaltung werden auf den Phasenwert eines Bildpunktes solange Vielfache von $\pi$ addiert bzw. subtrahiert, bis die Phasendifferenz zum vorangegangenen Bildpunkt kleiner als $\pi/2$ ist. Anschließend wird für jede Zeile eine lineare Regression durchgeführt, deren Ergebnis dann von der jeweiligen Zeile subtrahiert wird. Dabei werden der lineare Phasenanstieg und der Phasenoffset entfernt. Das Resultat der auf diese Weise korrigierten Phasenverteilung ist in Figur 5 b) dargestellt. Die negative und die positive Höhenänderung an den Rändern der Fuge sind deutlich als schwarzer und als weißer Streifen zu erkennen, während das übrige Bild gleichmäßig grau ist. Das eindimensionale Profil der korrigierten Phasenverteilung in Figur 5 d) verdeutlicht die Korrekturen gegenüber der ursprünglichen Phasenverteilung. Die Phasenanteile liegen symmetrisch zur *x*-Achse. Die negativen und positiven Höhenänderungen an den Fugenrändern sind vom Betrag gleich groß. Diese korrigierte Phasen-verteilung ist das Gradientenbild der Oberflächentopographie.

Zur Rekonstruktion der Oberflächentopographie aus diesem Gradientenbild wird entlang der *x*-Achse die numerische Integration durchgeführt. In Figur 5 c) ist das Ergebnis der Integration als Graustufenbild dargestellt. Die 98,5 nm Fuge ist deutlich als schwarzer Streifen zu erkennen. Das eindimensionale Profil der Fuge Figur 5 d) verdeutlicht die gute Reproduktion der Oberflächentopographie entlang der *x*-Achse. Die Fuge hat eine Tiefe von ca. 100 nm bei einer Breite von 50 $\mu$m.

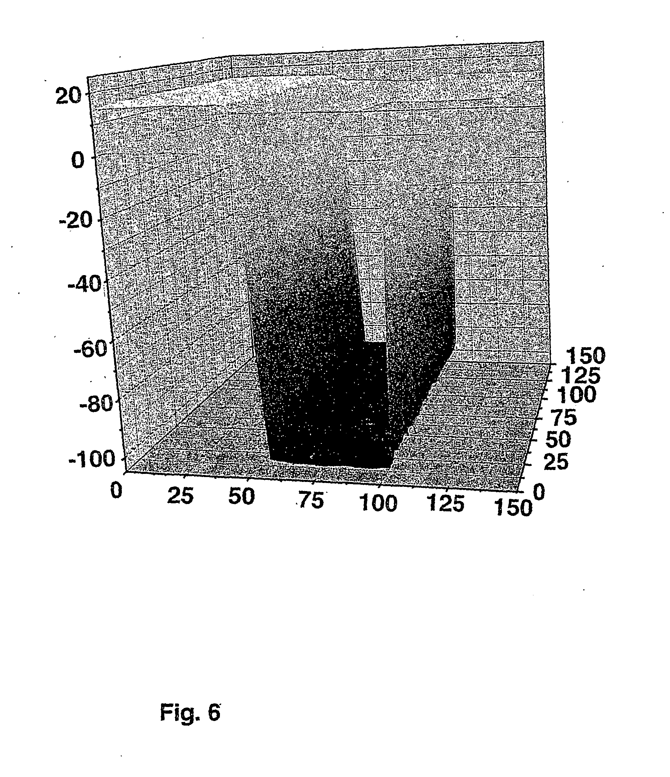

Die verwendete Software ermöglicht neben der Graustufendarstellungen auch die dreidimensionale Visualisierung der Messdaten. In **Figur 6** sind die Oberflächentopographien der 98,5 nm und der 2,7 nm Fuge des Tiefen-Einstellnormals übereinander dargestellt. Beide Fugen wurden senkrecht zur Scherrichtung orientiert, um deren tatsächliche Tiefe vermessen zu können. Die Darstellung der 2,7 nm tiefen Fuge wurde für eine bessere Übersichtlichkeit um 15 nm angehoben. Der Bildausschnitt hat eine Kantenlänge von 150 $\mu$m x 150 $\mu$m. X und y sind wiederum in $\mu$m, nach rechts beziehungsweise optisch nach hinten, z dagegen in nm nach oben aufgetragen. Trotz der fehlenden Höheninformation entlang der *y*-Achse ergibt sich ein sehr realistisches Bild der Oberflächentopographie. Auch die 2,7 nm Fuge wird sehr gut aufgelöst.

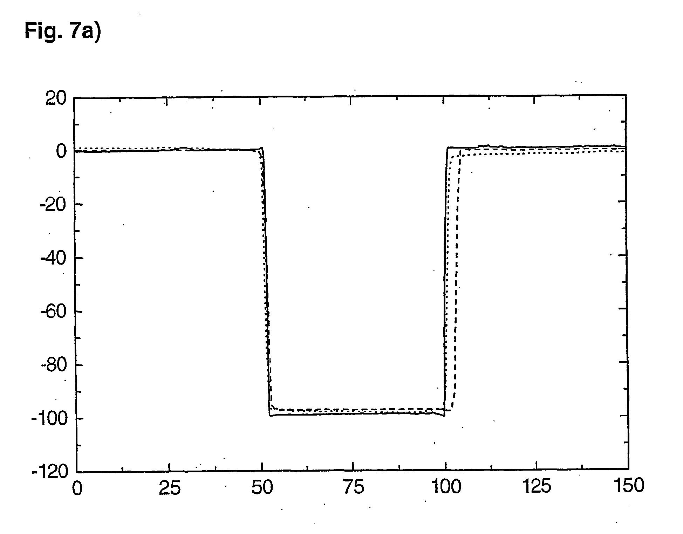

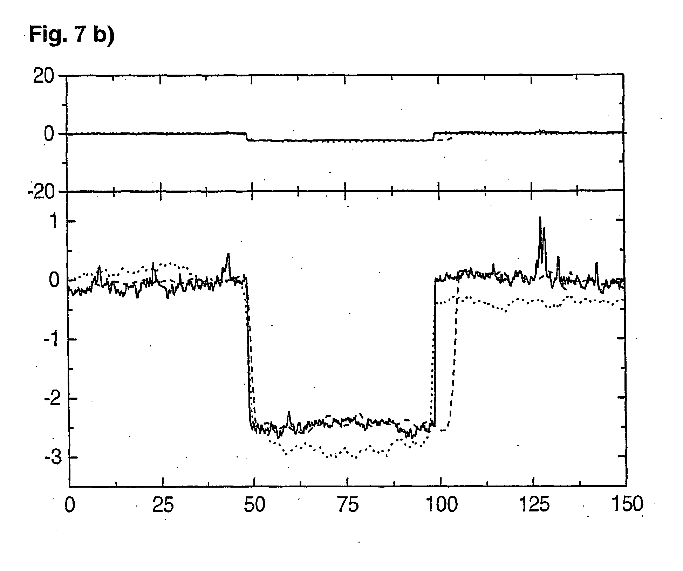

Zur Überprüfung der Resultate bietet sich ein Vergleich mit anderen bekannten Messgeräten an. **Figur 7** stellt dazu die Ergebnisse von Stufenmessungen mit dem mechanischen Profilometer (MP) in durchgezogener Line, dem optischen Heterodyne Profilometer (OHP) in gestrichelter Linie und dem Nomarski-Mikroskop nach der Erfindung (NM) in gepunkteter Linie für zwei Tiefen-Einstellnormale gegenüber. In **Figur 7 a)** sind drei Oberflächenprofile der 98,5 nm Fuge dargestellt. Zum Vergleich zeigt **Figur 7 b)** in zwei verschiedenen Maßstäben jeweils drei Oberflächenprofile der 2,7 nm Fuge, in der oberen Darstellung maßstabsgetreu zur 98,5 nm Fuge und in der unteren Darstellung stark vergrößert.

Wiederum ist x nach rechts in $\mu$m und z nach oben in nm eingetragen.

Unter Berücksichtigung der Tatsache, dass die Oberflächenprofile an unterschiedlichen Bereichen der Fuge gemessen wurden, ist die Übereinstimmung der Messergebnisse bezüglich der Tiefe und der Breite der Fugen ausgezeichnet. Eine Ausnahme bildet das optische Heterodyne Profilometer. Aufgrund seines Messprinzips, bei dem die Messwerte auf einem Kreis liegen, ist es nicht in der Lage, die Fugenbreite korrekt zu bestimmen. In der stark vergrößerten Darstellung der 2,7 nm Fuge wird darüber hinaus eine sinusförmige Abweichung der Ergebnisse des Nomarski-Mikroskops von den Ergebnissen der beiden anderen Messinstrumenten sichtbar. Es handelt sich dabei um einen für die Phasenverschiebungs-Interferometrie typischen Fehler, der auf kleine Abweichungen bei der Einstellung der Phasenverschiebung zurückzuführen ist. Er hat eine Amplitude von wenigen zehntel Nanometern bei einer festen Ortswellenlänge von etwa 150 $\mu$m. Bei der Bestimmung von Rauheiten superglatter Oberflächen muss dieser Fehler korrigiert werden. Aufgrund seiner festen Ortswellenlänge lässt sich dies durch eine Fourierfilterung realisieren, bei der Anteile mit dieser Ortswellenlänge aus dem Oberflächenprofil gefiltert werden.

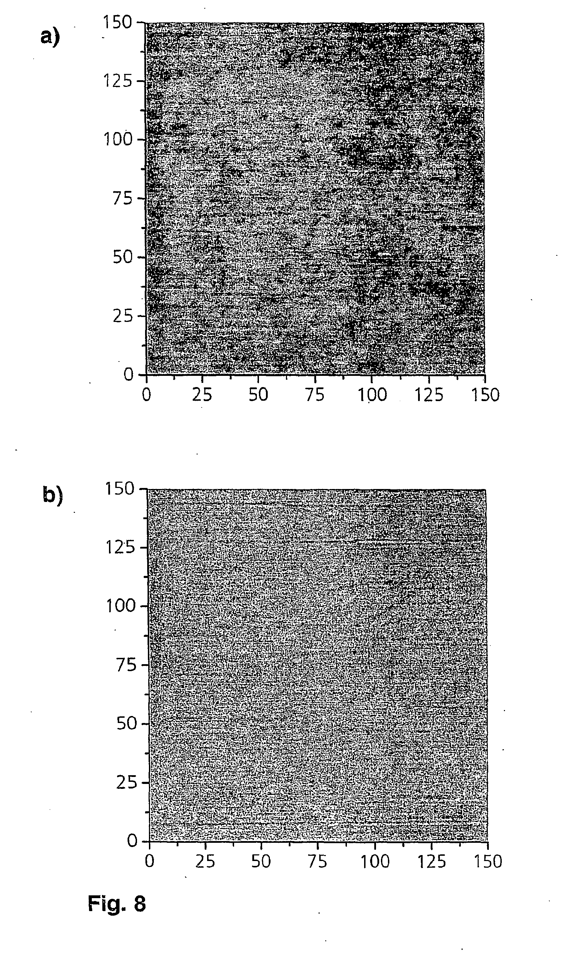

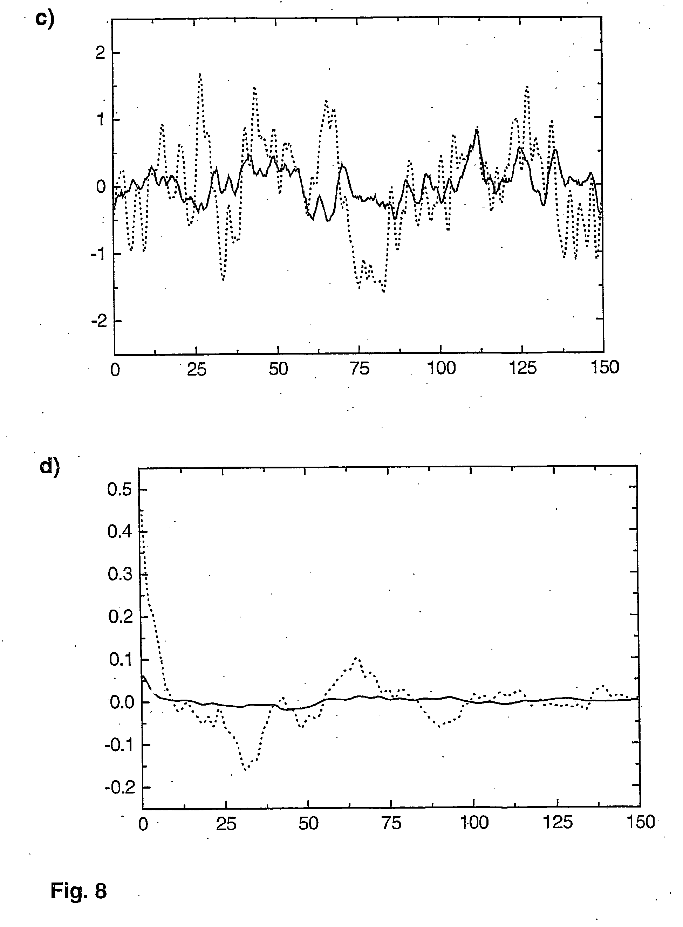

Für die Demonstration der Eignung der Vorrichtung für Rauheitsmessungen und weiterer statistischer Rauheitsparamerer wurden beispielhaft zwei BK7 Substrate ausgewählt, die mit 0135 (jeweils gepunktet dargestellt) und 0312 (jeweils als durchgezogene Linie dargestellt) bezeichnet sind. Die Ergebnisse der Rauheitsmessung sind in **Figur 8** zusammengefasst.

X und y sind in $\mu$m jeweils nach rechts beziehungsweise nach oben aufgetragen, z in nm in der Figur 8a) nach oben. Die Einstellungen der verschiedenen Messungen waren

a) Rq(OHP) = 0,82 nm, $I_c$ = 5 $\mu$m
$R_q$(NM) = 0,67 nm, $I_c$ = 4,33 $\mu$m

b) $R_q$(OHP) = 0,24 nm, $I_c$ = 9 $\mu$m
$R_q$(NM) = 0,25 nm, $I_c$ = 3,33 $\mu$m

Für die Graustufendarstellung der beiden Oberflächen in **Figur 8 a)** und **b)** wurde dieselbe Skalierung gewählt, d.h. schwarz entspricht einem z-Wert von - 6 nm und weiß einem z-Wert von +6 nm. Dadurch wird die unterschiedliche Rauheit der beiden Proben bereits in der Graustufendarstellung deutlich. Beide Darstellungen weisen Streifen in x-Richtung auf, woran das Fehlen der Höheninformationen entlang der y-Achse deutlich wird. Die größere Rauheit der Probe 0135 gegenüber der Probe 0312 wird an den eindimensionalen Oberflächenprofilen in **Figur 8 c)** besonders deutlich. Die aus den beiden Oberflächenprofilen berechneten Autokovarianzfunktionen werden **Figur 8 d)** gegenübergestellt. In Figur **8 d)** ist $\tau$ in $\mu$m nach rechts und c ($\tau$) in nm$^2$ nach oben aufgetragen. Danach hat die Probe 0135 eine mittlere quadratische Rauheit von 0,67 nm bei einer Korrelationslänge von 4,33 $\mu$m gegenüber einer mittleren quadratischen Rauheit von 0,25 nm und einer Korrelationslänge von 3,33 $\mu$m bei Probe 0312. Diese Ergebnisse bestätigen die Messwerte für die mittlere quadratische Rauheit, ermittelt mit dem optischen Heterodyne Profilometer (OHP). Dabei kann die Übereinstimmung der Ergebnisse von Nomarski-Mikrokop (NM) nach der Erfindung und optischem Heterodyne Profilometer für die ermittelte mittlere quadratische Rauheit $R_q$ am BK7 Substrat 0312 als sehr gut bezeichnet werden. Für die Korrelationslänge $I_c$ ergeben sich bei diesem Substrat jedoch gravierende Unterschiede, etwa Faktor drei, zwischen den beiden Meßinstrumenten. Beim BK7 Substrat 0135 weichen die Ergebnisse beider Meßinstrumente für $R_q$ und $I_c$ um 20 % bzw. 15 % voneinander ab.

Die Abweichungen zwischen den beiden Messgeräten sind zum einen darauf zurückzuführen, dass die Messungen an unterschiedlichen Bereichen auf der Probenoberfläche durchgeführt wurden. Zum anderen zeichnen sich beide Messgeräte durch unterschiedliche Bandgrenzen aus, die zu systematischen Abweichungen der Messergebnisse voneinander führen.

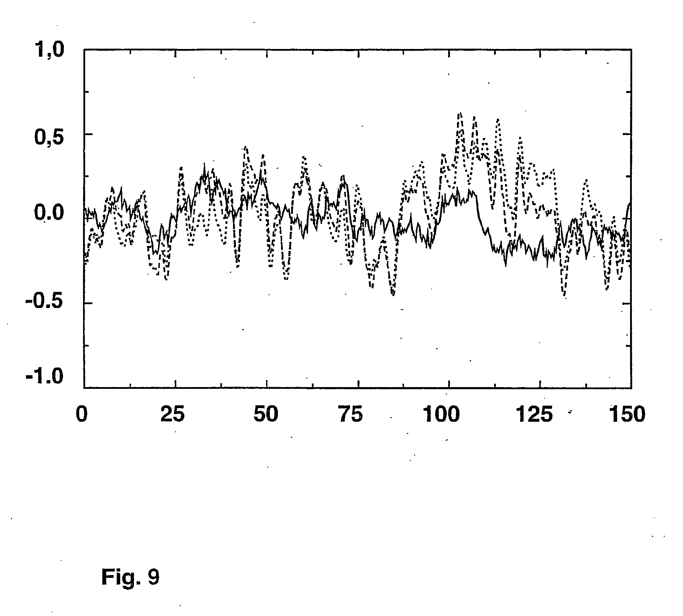

Die Bestimmung der Wiederholgenauigkeit dient der Ermittlung der minimalen vertikalen Auflösung. Dazu wurde die glattere BK7 Probe 0312 aus Figur 8 b) verwendet. An der gleichen Stelle auf der Oberfläche wurden zwei Rauheitsmessungen hintereinander durchgeführt. **Figur 9** stellt zwei eindimensionale Oberflächenprofile dieser beiden Messungen dar. X ist nach rechts in $\mu$m und z nach oben in nm aufgetragen. Die Einzelmessungen sind gestrichelt (Messung I bei $R_q$ = 0,22 nm) beziehungsweise punktiert (Messung II bei $R_q$ = 0,21 nm) eingetragen, die Differenz als durchgezogene Linie.

Die Abweichungen zwischen den beiden Einzelmessungen sind deutlich zu erkennen. Die Differenz der beiden Einzelmessungen weist eine mittlere quadratische Rauheit von 0,12 nm auf. Diese Wiederholgenauigkeit spiegelt das Signal-zu-Rausch Verhältnis des CCD-Sensors wieder. Die optische Auflösung des Mikroskops ist besser, da das Mikroskop bei der Betrachtung mit dem menschlichen Auge noch Strukturen von Oberflächentopographien mit Rauheiten von 0,05 nm wiedergibt.

Bei einer weiteren Ausführungsform der Erfindung wird die Drehachse des CCD-Sensors auf die Drehachse des Probenträgers, also den Träger des Werkstückes 10, zentriert. Dann können zwei Messungen an der jeweils um 90 Grad um die optische Achse des Mikroskops gedrehten Werkstück 10 durchgeführt werden, um Oberflächenstrukturen zu erfassen, die sowohl in x- als auch in y-Richtung verlaufen. Durch Überlagerung beider Linienprofile lässt sich dann ein vollständiges Bild der Oberfläche 11 des Werkstückes 10 ermitteln.

Bei nicht ausreichend gut zentrierten Achsen von CCD-Sensor und dem Träger des Werkstückes 10 kann eine weitere Ausführungsform zum Tragen kommen, bei der die Verschiebung des Bildausschnittes nach 90 Grad Drehung durch Bildvergleichsverfahren bestimmt wird.

**Bezugszeichenliste**

| | |
|---|---|
| 10 | Werkstück |
| 11 | Oberfläche des Werkstücks |
| 15 | einfallendes Licht |
| 16 | reflektierendes Licht |
| 20 | Lichtquelle |
| 21 | Spektralfilter |
| 22 | Polarisator |
| 23 | Teildurchlässiger Spiegel |

24    Normarski-Prisma
25    Objektivlinse
26    Analysator
27    Sensor, zum Beispiel Kamera

30    Auswerteeinheit

**Patentansprüche**

1.   Verfahren zur quantitativen optischen Messung der Topographie einer Oberfläche (11) eines Werkstückes (10), bei dem ein Differential-Interferenz-Kontrast-Verfahren nach Nomarski durchgeführt wird, bei dem mit Licht aus einem engen Frequenzspektrum gearbeitet wird und eine Auswertung mittels Phasenverschiebungs-Interferometrie erfolgt,
**dadurch gekennzeichnet,**
**dass** als Auswerteverfahren die Phasenmessungsinterferometrie eingesetzt wird, deren Auswertealgorithmus keine Abhängigkeit des Ergebnisses von der Grundhelligkeit oder einer ungleichmäßigen Helligkeitsverteilung enthält,
**dass** eine Kalibrierung der Phasenverschiebung vorgenommen wird,
**dass** dazu eine Aufzeichnung der Bildhelligkeit als Funktion der Phasenlage erfolgt, und
**dass** die Auswertung nach einem theoretischen Modell für den Helligkeitsverlauf erfolgt.

2.   Verfahren nach Anspruch 1,
**dadurch gekennzeichnet,**
**dass** die Phasenlage durch Verschiebung des Nomarski-Prismas (24) oder durch Drehung des Analysators (26) verändert wird.

3.   Verfahren nach Anspruch 1 oder 2,
**dadurch gekennzeichnet,**
**dass** die Phase in Schritten zwischen 0 und $\pi$, vorzugsweise $\pi/2$, verschoben wird, und
**dass** in aufeinanderfolgenden Messungen die Intensität gemessen wird.

4.   Verfahren nach Anspruch 1 oder 2,
**dadurch gekennzeichnet,**
**dass** die Phase kontinuierlich verschoben und die Intensität integriert wird.

5.   Verfahren nach einem der Ansprüche 1 bis 4,
**dadurch gekennzeichnet,**
**dass** eine quantitative Auswertung der mittels Phasenverschiebungs-Interferometrie gewonnenen Phasenverteilung mittels einer Entfaltung erfolgt.

6.   Verfahren nach Anspruch 5.
**dadurch gekennzeichnet,**
**dass** die Entfaltung so vorgenommen wird, dass auf den Phasenwert eines Bildpunktes so lange Vielfache von $\pi$ addiert beziehungsweise subtrahiert werden, bis die Phasendifferenz kleiner als $\pi/2$ ist und anschließend für jede Zeile eine lineare Regression durchgeführt wird, deren Ergebnis von der jeweiligen Zeile subtrahiert wird.

7.   Verfahren nach einem der Ansprüche 5 oder 6,
**dadurch gekennzeichnet,**
**dass** zur Rekonstruktion der Topographie der Oberfläche (11) des Werkstückes (10) das ermittelte entfaltete Bild integriert wird.

8.   Verfahren nach einem der Ansprüche 1 bis 7,
**dadurch gekennzeichnet,**
**dass** die Drehachse eines Sensors in der Auswerteeinheit (30) auf die Drehachse des Trägers des Werkstückes (10) zentriert wird,
**dass** mindestens zwei Messungen an dem um diese optische Achse relativ zum Sensor um einen Winkel gedrehten Werkstück durchgeführt werden, und
**dass** eine Überlagerung und/oder Verrechnung der Linienprofile zur flächigen Erfassung von Oberflächenstrukturen in zwei Richtungen vorgenommen werden.

9. Verfahren nach Anspruch 8,
   **dadurch gekennzeichnet,**
   **dass** genau zwei Messungen an dem dazu um 90° um die optische Achse relativ zum Sensor gedrehten Werkstück durchgeführt werden.

10. Verfahren nach einem der Ansprüche 1 bis 9,
    **dadurch gekennzeichnet,**
    **dass** in den Strahlengang eines herkömmlichen Mikroskops eine auswechselbare Moduleinheit mit einem Nomarski-Prisma (24) eingeschoben wird.

## Claims

1. Method for the quantitative optical measurement of the topography of a surface (11) of a workpiece (10), in which a Nomarski-type differential interference contrast procedure is conducted, in which light from a narrow frequency spectrum is worked with and an evaluation occurs by means of phase shift interferometry, **characterised in that** phase measurement interferometry is used as the evaluation method, wherein its evaluation algorithm does not include dependence of the result on the background brightness or on an uneven brightness distribution,
   that a calibration of the phase shift is undertaken,
   that there ensues a recording of the image brightness as a function of the phase position, and
   that the evaluation ensues according to a theoretical model for the brightness curve.

2. Method according to Claim 1, **characterised in that** the phase position is varied by displacement of the Nomarski prism (24) or by rotation of the analyser (26).

3. Method according to Claim 1 or 2, **characterised in that** the phase is shifted in steps between 0 and $\pi$, preferably $\pi/2$, and
   that the intensity is measured in consecutive measurements.

4. Method according to Claim 1 or 2, **characterised in that** the phase is shifted continuously and the intensity is integrated.

5. Method according to one of Claims 1 to 4, **characterised in that** a quantitative evaluation of the phase distribution obtained by means of phase shift interferometry occurs by means of a deconvolution.

6. Method according to Claim 5, **characterised in that** the deconvolution is performed such that multiples of $\pi$ are added or subtracted to/from the phase value of an image point until the phase difference is less than $\pi/2$ and then for each line a linear regression is conducted, the result of which is subtracted from the respective line.

7. Method according to one of Claims 5 or 6, **characterised in that** the determined unfolded image is integrated for reconstruction of the topography of the surface (11) of the workpiece (10).

8. Method according to one of Claims 1 to 7, **characterised in that** the rotational axis of a sensor in the evaluation unit (30) is centred on the rotational axis of the support of the workpiece (10),
   that at least two measurements are performed on the workpiece rotated relative to the sensor by an angle around this optical axis, and
   that a superposition and/or calculation of the line profiles is conducted for plane detection of surface structures in two directions.

9. Method according to Claim 8, **characterised in that** precisely two measurements are performed on the workpiece rotated for this relative to the sensor by 90° around the optical axis.

10. Method according to one of Claims 1 to 9, **characterised in that** a replaceable module unit with a Nomarski prism (24) is inserted into the optical path of a conventional microscope.

**Revendications**

1. Procédé de mesure optique quantitative de la topographie d'une surface (11) d'une pièce (10),
dans lequel un procédé à contraste d'interférence différentielle selon Nomarski est mis en oeuvre, où l'on travaille avec de la lumière d'un spectre de fréquence étroit et où une évaluation est effectuée au moyen d'une interférométrie par déphasage,
**caractérisé**
**en ce qu'**on utilise comme procédé d'évaluation l'interférométrie par mesure de phases, dont le résultat de l'algorithme d'évaluation ne dépend pas de la luminosité de base ou d'une répartition non homogène de la luminosité,
**en ce qu'**un calibrage du déphasage est effectué,
**en ce que**, à cet effet, la luminosité des images est enregistrée comme fonction de la relation de phase et
**en ce que** l'évaluation a lieu selon un modèle théorique pour le tracé de la luminosité.

2. Procédé selon la revendication 1,
**caractérisé en ce que**
la relation de phase est modifiée par le décalage du prisme de Nomarski (24) ou par la rotation de l'analyseur (26).

3. Procédé selon la revendication 1 ou 2,
**caractérisé en ce**
**que** la phase est décalée par étapes entre 0 et n, de préférence $\pi/2$ et
en ce que l'intensité est mesurée lors de mesures successives.

4. Procédé selon la revendication 1 ou 2,
**caractérisé en ce**
**que** la phase est décalée de manière continue et l'intensité intégrée.

5. Procédé selon l'une quelconque des revendications 1 à 4,
**caractérisé en ce**
**qu'**une évaluation quantitative de la répartition des phases obtenue au moyen d'une interférométrie par déphasage est effectuée au moyen d'un déploiement.

6. Procédé selon la revendication 5,
**caractérisé en ce**
**que** le déploiement est effectué de telle manière que des multiples de n sont additionnés à ou soustraits de la valeur de phase d'un point d'image jusqu'à ce que la différence de phase soit inférieure à n/2 et en ce qu'ensuite une régression linéaire, dont le résultat est soustrait de la ligne correspondante, est effectuée pour chaque ligne.

7. Procédé selon l'une quelconque des revendications 5 ou 6,
**caractérisé en ce**
**que** l'image déployée déterminée est intégrée pour reconstruire la topographie de la surface (11) de la pièce (10).

8. Procédé selon l'une quelconque des revendications 1 à 7,
**caractérisé en ce**
**que** l'axe de rotation d'un capteur dans l'unité d'évaluation (30) est centré sur l'axe de rotation du support de la pièce (10),
en ce qu'au moins deux mesures sont effectuées sur la pièce tournée d'un angle autour de cet axe optique par rapport au capteur et
en ce qu'un battement et/ou une compensation des profils de lignes sont effectués pour la saisie plane de structures de surface dans deux directions.

9. Procédé selon la revendication 8,
**caractérisé en ce**
**qu'**exactement deux mesures peuvent être effectuées sur la pièce tournée à cet effet de 90° autour de l'axe optique par rapport au capteur.

10. Procédé selon l'une quelconque des revendications 1 à 9,
**caractérisé en ce**
**qu'**une unité de module échangeable avec un prisme de Nomarski (24) est insérée au niveau de la trajectoire des rayons d'un microscope traditionnel.

**27**

16

26

$\alpha_a = 135°$

16

$\alpha_p = 45°$

20

21   15   22

15

23

15   16

24

15   16

25

15   11

15   10

**Fig. 1**

14

Fig. 2

**Fig. 3**

Fig. 4

Fig. 5

Fig. 6

**Fig. 7a)**

## Fig. 7 b)

**Fig. 8**

EP 1 290 485 B1

**Fig. 8**

23

**Fig. 9**